# EUROPÄISCHE PATENTSCHRIFT

(11) **EP 2 147 232 B1**
(45) Veröffentlichungstag und Bekanntmachung des Hinweises auf die Patenterteilung: **16.05.2012**
(21) Anmeldenummer: 08707283.1
(22) Anmeldetag: 25.01.2008
(51) Int. Cl.: F16H 48/06

(54) **DIFFERENTIAL IN LEICHTBAUWEISE FÜR KRAFTFAHRZEUGE**
DIFFERENTIAL OF LIGHTWEIGHT CONSTRUCTION FOR MOTOR VEHICLES
DIFFÉRENTIEL DE CONSTRUCTION LÉGÈRE POUR VÉHICULES AUTOMOBILES

(30) Priorität: 08.05.2007 DE 102007021437
(43) Veröffentlichungstag der Anmeldung: 27.01.2010
(73) Patentinhaber: SONA BLW Präzisionsschmiede GmbH, 80807 München (DE)
(72) Erfinder: GUTMANN, Peter, 81927 München (DE)
(74) Vertreter: Grättinger Möhring von Poschinger Patentanwälte Partnerschaft
(86) Internationale Anmeldenummer: PCT/EP2008/000573
(87) Internationale Veröffentlichungsnummer: WO 2008/135102

(56) Entgegenhaltungen:
- EP-B- 0 979 959
- DE-A1- 1 810 520
- DE-A1- 10 022 611
- DE-A1- 10 059 684
- DE-C- 462 127
- DE-C1- 19 546 331

## Beschreibung

Die Erfindung betrifft ein Differential in Leichtbauweise für Kraftfahrzeuge mit einem aus zwei Blechschalen bestehenden Ausgleichsgehäuse, in welchem Ausgleichkegelräder auf gehäusefesten Mitnehmerbolzen gelagert und mit Achskegelrädern verzahnt sind, und wobei eine Tragschale, an deren Außenumfang ein Antriebszahnrad befestigt ist, und eine Deckelschale zur Bildung des Ausgleichsgehäuses längs einer gemeinsamen Verbindungsebene zusammengefügt sind und wobei ein oder mehrere Mitnehmerbolzen jeweils mit wenigstens einem Ende in Gehäusebohrungen aufgenommen und dort befestigt sind, welche jeweils zur Hälfte in der Tragschale und der Deckelschale ausgebildet sind.

In EP 0979959 B1 ist ein Herstellungsverfahren für Kraftfahrzeug-Ausgleichsgetriebe beschrieben, wobei das Ausgleichsgehäuse aus zwei Gehäuseteilen besteht, die durch Kaltverformung aus Blechzuschnitten hergestellt sind und vor ihrem dauerhaften Verbinden durch Schweißen einer maschinellen Fertigbearbeitung unterzogen werden.

Zum Zwecke der Antriebsübertragung wird an der Außenseite eines der Gehäuseteile eine Zahnradscheibe befestigt. Beide Gehäuseteile umfassen Lagernaben für den Anschluss der Radachsen; die Lagernaben sind an ihrem Umfang feinbearbeitet zur Aufnahme von Axialkugellagern.

Bei dem bekannten Ausgleichsgehäuse besitzen die beiden Gehäuseteile eine verhältnismäßig große Wandstärke und einen noch dadurch vergrößerten Durchmesser, dass beide Gehäuseschalen im Verbindungsbereich ineinander greifen. Durch die Lagerung des Mitnehmerbolzens allein in der inneren Gehäuseschale ist deren Wandstärke beträchtlich, um eine ausreichende Sitzfläche für die Enden des Mitnehmerbolzens zu gewährleisten.

Demgegenüber liegt der vorliegenden Erfindung die Aufgabe zugrunde, ein Differential der eingangs genannten Art zu schaffen, dessen Ausgleichsgehäuse besonders dünnwandig und damit gewichtsparend ausgebildet ist; außerdem soll es zusammengesetzt sein aus lastabhängig dimensionierbaren Strukturbauteilen, die eine leichte Anpassung an verschiedene Lastfälle wie bei einem Modulsystem ermöglichen.

Diese Aufgabe wird erfindungsgemäß dadurch gelöst, dass beide Blechschalen angrenzend an deren Verbindungsebene (4) von ein oder mehreren Umfangsringen zu ihrer Aussteifung eingefaßt sind.

Im Sinne der angestrebten Leichtbauweise bestehen die Blechschalen bevorzugt aus Stahlwerkstoffen hoher Festigkeit mit gutem Formänderungsvermögen. Die Blechstärke der fertigen Blechschalen beträgt vorzugsweise lediglich zwischen 2 und 5 mm, je nach Größe des Ausgleichsgehäuses, gemessen am Innendurchmesser seiner Kugelform.

Die bevorzugt durch Blechumformen hergestellten Blechschalen des Ausgleichsgehäuses besitzen für den Anschluss der Radachsen jeweils eine nach außen vorspringende Lagernabe, welche koaxial zu dem an die Trennebene angrenzenden großen Durchmesser der jeweiligen Blechschale ausgebildet oder als separat hergestellte Nabenhülse mit der Blechschale verbunden ist. Die Stärke der Blechschale nimmt dabei zweckmäßig vom Nabenansatz zur Verbindungsebene hin stetig geringfügig ab.

Angrenzend an die Verbindungsebene sind an den Außenseiten der Blechschalen Zylinderflächen als Sitzflächen ausgebildet, die an entsprechenden Innensitzflächen der Umfangsringe anliegen. Bevorzugt kommen ein oder zwei Umfangsringe in Frage, entweder in Form eines die gemeinsame Trennebene der Blechschalen überbrückenden einteiligen Umfangsrings oder in Form zweier an die Trennebene angrenzender Umfangsringe, wobei jeder Umfangsring nur mit einer Blechschale verbunden ist.

Bei der einteiligen Ausführungsform kann die Ringdicke von der Deckelschale zur Tragschale abnehmen. Bei der zweiteiligen Ausführungsform können die Dicken der Umfangsringe unterschiedlich sein, wobei der Ring mit dem steiferen Querschnitt bevorzugt auf der Deckelschale sitzt.

Die Umfangsringe besitzen zu den Gehäusebohrungen fluchtende Sitzbohrungen zur Aufnahme der Mitnehmerbolzen, so dass deren Enden nicht nur in den von beiden Blechschalen gebildeten Gehäusebohrungen aufgenommen sind, sondern in damit fluchtenden Sitzbohrungen der Umfangsringe abgestützt sind.

Die Umfangsringe sorgen für eine spezielle Aussteifung des Ausgleichsgehäuses im Bereich der gemeinsamen Trennebene, so dass die Blechschalen selbst eine verhältnismäßig geringe Blechstärke aufweisen können.

Um eine spanende Bearbeitung der Blechschalen im Verbindungsbereich mit den Umfangsringen entbehrlich zu machen, genügt es die Umfangsringe in Axialrichtung wenigstens in zwei Ringhälften zu teilen. Dadurch wird beim Schweißen eine genaue Anschmiegung der Ringhälften an die Schalenkontur erreicht.

Ein fester Verbund der das Ausgleichsgehäuse bildenden Bauteile entsteht dadurch, dass die Umfangsringe in der Verbindungsebene, falls zwei getrennte Umfangsringe verwendet werden, und außerdem längs ihrer Außenränder mit den Außenseiten der Blechschalen verschweißt sind. Im Falle eines einzigen Umfangsrings kommen zwei Schweißnähte längs dessen Außenränder in Frage. Außerdem sind die Mitnehmerbolzen, im Falle eines einzigen Mitnehmerbolzens, wenigstens eines seiner Enden längs des Umfangs ihrer Stirnseiten mit einem oder mehreren der Umfangsringe verschweißt. Auf diese Weise gewährleisten die Mitnehmerbolzen die Drehmomentübertragung vom Antriebszahnrad über das Ausgleichsgehäuse auf die Achskegelräder und damit die Radachsen des Kraftfahrzeugs. Als Antriebszahnrad kommt üblicherweise ein kegelverzahntes Tellerrad zum Einsatz; auch stirnverzahnte Antriebszahnräder sind geeignet.

Gemäß einer weiteren Ausgestaltung der Erfindung ist vorgesehen, dass die Zahnscheibe des Antriebszahnrads wenigstens längs zweier Umfangskanten ihrer Innenumfangsfläche mit der Tragschale und/oder einem Umfangsring verschweißt ist. Vorteilhaft ist dabei die innere Umfangsfläche der Zahnscheibe so ausgebildet, dass sie der Außenkontur der Tragschale, an welcher das Antriebszahnrad befestigt ist, im Wesentlichen entspricht. Die Innenkontur der Zahnscheibe kann auch so ausgebildet sein, dass sie auch oder nur an einem Umfangsring anliegt und mit diesem verschweißt ist. Sie kann damit leichter an unterschiedliche Baugrößen angepasst werden.

Gemäß einer weiteren vorteilhaften Ausführungsform der Erfindung sind Nabenringe zur Aussteifung der Lagernaben für den Anschluss der Radachsen an die Blechschalen vorgesehen. An den Außenseiten der Lagernaben ist jeweils ein Nabenring im Bereich des Nabenansatzes befestigt. Jeder Nabenring bildet mit der Blechschale bevorzugt eine gemeinsame Stützfläche und ist längs zweier Umfangskanten mit dieser verschweißt. Die Nabenringe verstärken das Ausgleichsgehäuse im Bereich der Lagernaben, so dass insbesondere im Übergangsbereich von Blechschale und Lagernabe auf eine besonders steife Ausbildung der Blechschale selbst verzichtet werden kann. Die Nabenringe bieten gleichzeitig axiale Stützflächen für auf der Lagernabe sitzende Wälzlager, z.B. als vorgespannte Schrägkugellager.

Derartige Nabenringe können dadurch entfallen, dass für den Anschluss der Radachsen jede Blechschale mit einer Nabenhülse verbunden ist, an welcher ein nach außen vorspringender Lagersitz ausgebildet ist, an den sich ein an die Form der Blechschale angepasster Verbindungsring anschließt. Kerbspannungen in der Fügezone der Nabenringe mit den Blechschalen lassen sich dadurch weitgehend vermeiden.

Zur Reduzierung des Gewichts, auch zur Schaffung einer Öldränage kann das Ausgleichsgehäuse im Bereich der Tragschale und der Deckelschale eine oder mehrere Durchbrechungen aufweisen.

Bei der Montage des Ausgleichsgehäuses wird vorteilhaft so vorgegangen, dass der komplette Radsatz aus Ausgleichskegelrädern und Achskegelrädern in eine offene Blechschale - Tragschale oder Deckelschale - eingesetzt wird, wonach die andere Blechschale aufgesetzt wird und die beiden Blechschalen entlang einer oder mehrerer Umfangskanten der Umfangsringe miteinander verschweißt werden. Erst danach wird das Antriebszahnrad an der Tragschale angeschweißt.

Im Rahmen der Erfindung bietet es sich an, die beiden Blechschalen, von denen eine als Deckelschale, die andere als Tragschale dient, identisch auszubilden, was zu einer erheblichen Herstellungsvereinfachung gegenüber bekannten Ausführungsformen von Ausgleichsgehäusen führt.

Besonders zweckmäßig ist eine Ausführungsform mit nur einem diagonal durchgehenden Mitnehmerbolzen, auf welchen die Ausgleichsräder gelagert sind. Die Drehung des Ausgleichsgehäuses wird über die vorteilhaft als Hohlbolzen ausgestalteten Mitnehmerbolzen auf die Radachsen übertragen. Dadurch, dass die Achskegelräder der Radachsen und die Ausgleichskegelräder miteinander kämmen, wird der angestrebte Ausgleich unterschiedlicher Drehzahlen der beiden Radachsen ohne Drehmomentunterbrechung ermöglicht. Um einen ruhigen Lauf des Kegelradgetriebes zu gewährleisten, ist eine Ausrichtung der auf den Getriebesatz ausgeübten Reaktionskräfte in der Weise anzustreben, dass deren Resultierende in Richtung der Teilkegel-Mantellinie verläuft, d.h. Verlagerungskräfte auf das Kegelradgetriebe verlaufen radial in Richtung der Verzahnungsmitte. Dadurch werden störungsfreie Eingriffsverhältnisse des Kegelradgetriebes gewährleistet. Zwecks Beeinflussung der Richtung der Reaktionskräfte in dem genannten Sinne besteht die Möglichkeit, die Umfangsringe in ihrer Dimension den jeweiligen Verhältnissen anzupassen, ohne dass es eine Veränderung hinsichtlich der Gestaltung der das Ausgleichsgehäuse bildenden Blechschalen bedarf. Auf diese Weise kann die angestrebte Gestaltoptimierung auf Seiten der Tragschale und der Deckelschale des Ausgleichsgehäuses zum Beispiel hinsichtlich Blechdicke und deren Verjüngung durchgehalten werden. Die Krafteinwirkung auf das Axialgehäuse ist bei gegebenen Axialkräften in Richtung der Antriebsachsen dadurch beeinflussbar, dass die Steifigkeit des Ausgleichsgehäuses durch geeignete Dimensionierung der Umfangsringe einstellbar ist.

Im folgenden wird ein Ausführungsbeispiel der Erfindung anhand der Zeichnung erläutert. Es zeigt
- Fig. 1: einen Axialschnitt durch die Tragschale,
- Fig. 2: einen Axialschnitt durch das Ausgleichsgehäuse nach Zusammenfügen von Tragschale und Deckelschale, mit einteiligem Umfangsring,
- Fig. 3: einen Schnitt gemäß Fig. 2, jedoch mit konischem Umfangsring, nach Befestigung eines zahnkranzförmigen Antriebstellerrads,
- Fig. 4: eine Schnittdarstellung gemäß Fig. 3, jedoch mit zwei Umfangsringen, nach Montage der Axiallager auf den Lagernaben und mit einer Sitzschale für das Antriebstellerrad
- Fig. 5: eine perspektivische Ansicht der gemäß Fig. 2 zusammengefügten Bauteile eines Ausgleichsge- häuses mit ausgeschnittenem 90°-Sektor, ohne Zahnräder,
- Fig. 6: eine Ansicht einer anderen Ausführungsform des Ausgleichsgehäuses
- Fig. 7: einen in Axialrichtung hälftig geteilten Umfangsring,
- Fig. 8: eine Nabenhülse in aufgeschnittener Darstellung,
- Fig. 9: ein Antriebszahnrad in aufgeschnittener Darstellung,
- Fig.10: eine Blechschale des Ausgleichsgehäuses in der Ansicht und
- Fig.11: einen Axialschnitt durch das Ausgleichsgehäuse.

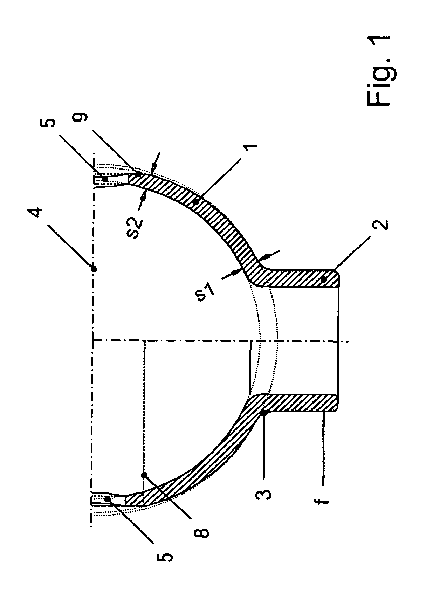

Figur 1 zeigt einen axialen, das heißt durch die Radachse verlaufenden Halbschnitt durch die Tragschale 1 eines Ausgleichsgehäuses eines Differentials. Die Tragschale 1 ist üblicherweise durch Tiefziehen oder ein entsprechendes Blechumformverfahren hergestellt. Sie besitzt eine Lagernabe 2, deren Lagersitz f zur Aufnahme eines Axiallagers bearbeitet ist. Man erkennt, dass die vom zu übertragenden Drehmoment abhängige Wandstärke der Tragschale ausgehend vom Nabenansatz 3 hin zur Verbindungsebene 4 mit deren (nicht gezeichneten) Deckelschale stetig abnimmt, in dem vorliegenden Beispiel etwa von 4 mm bei S1 bis auf 3 mm bei S2. Zur Trennebene 4 hin sind in die Tragschale 1 halbkreisförmige Stützflächen 5 eingearbeitet zur Aufnahme der Enden eines (nicht gezeichneten) Mitnehmerbolzens, welcher im Bereich der Trennebene 4 diagonal durch das Ausgleichsgehäuse hindurch verläuft und auf welchem die Ausgleichskegelräder sitzen.

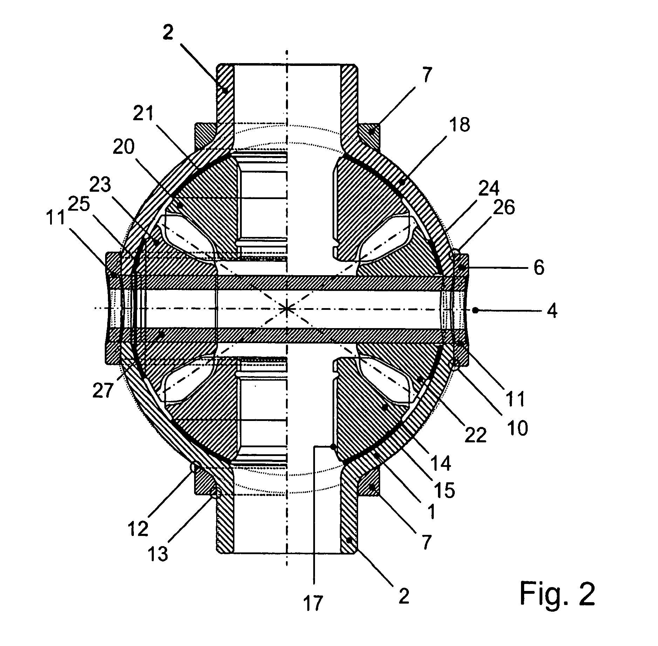

Figur 2 zeigt das komplette Ausgleichsgehäuse, das heißt, die Deckelschale 18 ist derart auf der Tragschale 1 aufgesetzt, dass beide Blechschalen 1,18 in ihrer gemeinsamen Verbindungsebene 4 aufeinander liegen. An der Tragschale 1 sind ein Umfangsring 6 und ein Nabenring 7 befestigt. Wie in Figur 1 ersichtlich, besitzt die Tragschale 1 an ihrer Außenfläche oberhalb der gestrichelten Linie 8 eine zylindrische Abdrehung 9, welche als Sitzfläche für den Umfangsring 6 dient. Der Umfangsring 6 ist mit seinem unteren Rand längs der Schweißnaht 10 mit der Außenseite der Tragschale 1 verschweißt. Der Umfangsring 6 besitzt diagonal gegenüberliegende Bohrungen 11, welche genau mit den Sitzflächen 5 der Tragschale 1 fluchten. Die Bohrungen 11 und die Sitzflächen 5 dienen der Abstützung der gegenüberliegenden Enden des bereits erwähnten Mitnehmerbolzens 27. Beide Blechschalen 1,18 werden dadurch miteinander fest verbunden, dass der obere Rand des Umfangsrings 6 längs einer umlaufenden Schweißnaht 26 mit der Deckelschale 18 verschweißt wird. Damit ist das Ausgleichsgehäuse fertig montiert. Es ist noch an die (nicht gezeichneten) Radachsen anzuschließen und wird dann innerhalb eines (nicht gezeichneten) Außengehäuses des Differentials montiert.

Während der Umfangsring 6 der Aussteifung der Blechschalen 1,18, die das Ausgleichsgehäuse bilden, im Bereich der Trennebene 4 dient, bewirken Nabenringe 7 eine entsprechende Aussteifung im Bereich des Nabenansatzes 3 der beiden Blechschalen. Die Nabenringe 7 besitzen auf ihrer der Tragschale 1 zugewandten Seite eine der Oberfläche der Blechschalen entsprechende Kontur, so dass sie an deren Außenseite anliegen. Sie sind jeweils an ihrer Innenkante längs einer Schweißnaht 12 und an ihrer Außenkante längs einer weiteren Schweißnaht 13 mit der zugeordneten Blechschale fest verbunden. Die Nabenringe 7 können jeweils als vorgefertigter Ring hergestellt sein; sie können auch als endloses Band hergestellt und in der gezeigten Position um die Blechschale gewickelt und dann verschweißt werden.

In die Tragschale 1 ist ein Achskegelrad 14 eingesetzt, wobei eine Stützschale 15 zwischen dem Achskegelrad 14 und der Innenwand der Tragschale 1 eingelegt ist. Die Kegelradverzahnung des Achskegelrads 14 kämmt mit den beiden Ausgleichskegelrädern 22, 23, welche auf dem Mitnehmerbolzen 27 gelagert sind. Die Bohrung des Achskegelrads 14 besitzt eine Kerbverzahnung 17 für die Drehmomentübertragung auf die Radachse. In der Deckelschale 18 ist ein Achskegelrad 20 auf einer Stützschale 21 angeordnet.

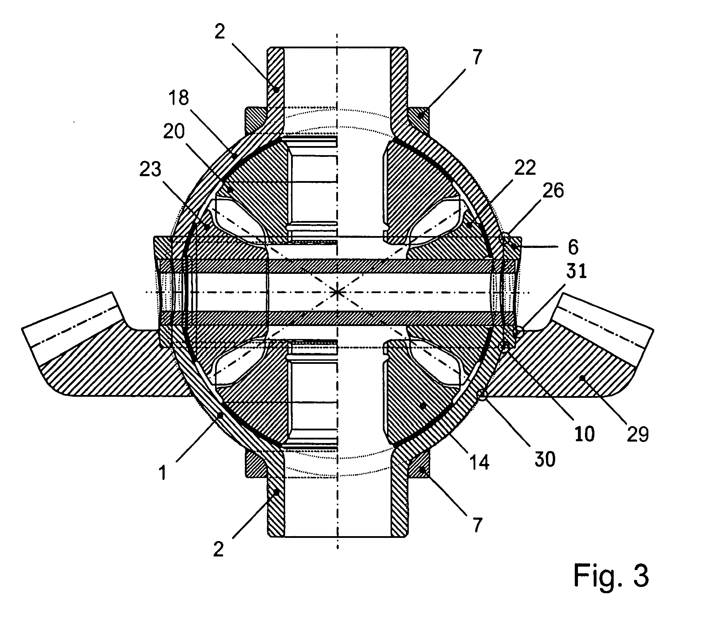

Figur 3 zeigt die Anbringung des Antriebszahnrads 29, welches mit einem Teil seiner Innenkontur an der Außenseite der Tragschale 1 anliegt, mit einem Ausschnitt den unteren Rand des Umfangsrings 6 umfasst und einerseits am Umfangsring längs der umlaufenden Schweißnaht 31, andererseits an der Tragschale 1 längs der umlaufenden Schweißnaht 30 befestigt ist. Das Antriebszahnrad 29 ist als Tellerrad ausgebildet. Es überträgt das Antriebsdrehmoment über die Tragschale 1 auf das Ausgleichsgehäuse, welches entsprechend der Antriebsdrehzahl rotiert. Ein einteiliger Umfangsring 6 ist im Querschnitt konisch ausgebildet, wobei er mit seinem stärkeren Ende die Deckelschale 18 umfasst, mit welcher er längs der Schweißnaht 26 verschweißt ist.

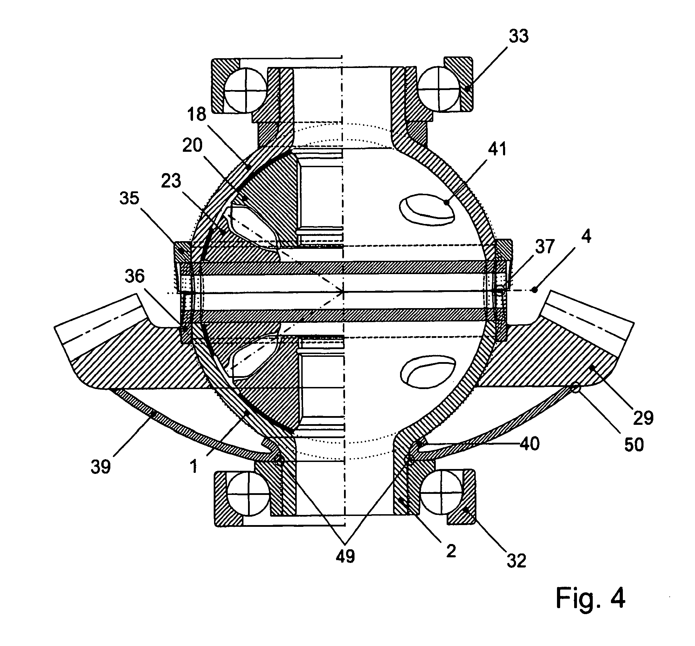

Figur 4 zeigt einen axialen Halbschnitt durch ein komplettes Ausgleichsgehäuse ähnlich Figur 3. Zusätzlich zu Figur 3 sind in der Figur 4 auch die Axialkugellager 32, 33 auf den Lagernaben 2 montiert.

In der Ausführungsform gemäß Figur 4 ist ein geteilter Umfangsring vorgesehen, das heißt, dieser besteht aus einem oberen Umfangsring 35 größerer Dicke um die Deckelschale 18 und einem unteren Umfangsring 36 geringerer Dicke um die Tragschale 1. Beide Umfangsringe 35, 36 sind in der Verbindungsebene 4 längs einer umlaufenden Schweißnaht 37 miteinander verschweißt.

Im Falle der Ausführungsform gemäß Figur 4 ist das Antriebszahnrad 29 an seiner Innenkontur oben mit dem unteren Umfangsring 36 und unten mit der Tragschale 1 verschweißt. Diese Variante des Antriebszahnrads 29 ist als Strukturbauteil besser verwendbar, da es leichter in ein Modulsystem integrierbar ist.

Zur zusätzlichen Abstützung des Antriebszahnrads 29 ist an seiner Unterseite eine Stützschale 39 durch Schweißen längs der Schweißnaht 50 befestigt, deren aufgebogener Innenrand 40 auf der Oberseite des benachbarten Axiallagers 32 und im Bereich des Nabenansatzes der Tragschale 1 abgestützt ist. Die Verbindung zur Tragschale 1 erfolgt längs der Schweißnaht 49.

In beiden Blechschalen 1,18 sind Durchbrechungen 41 vorgesehen, die der Gewichtsreduzierung dienen und außerdem als Öldrainage geeignet sind.

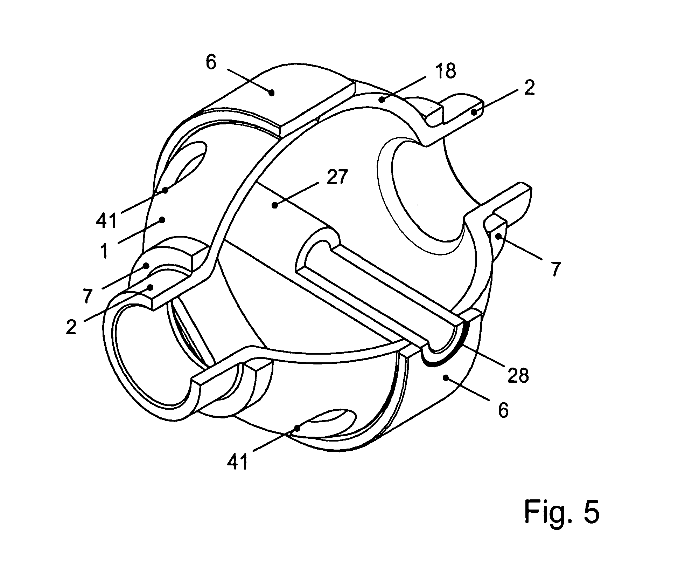

Figur 5 zeigt eine räumliche Darstellung des Ausgleichsgehäuses, wobei ein 90°-Sektor herausgeschnitten ist, um die Innenansicht ohne Kegelräder darzustellen. In dieser Innenansicht erkennt man einen entsprechend geschnittenen Mitnehmerbolzen 27, der aus Gewichtsgründen als zylindrisches Rohr ausgebildet ist. Um Kosten zu sparen werden derartige Mitnehmerbolzen auch aus Vollmaterial hergestellt. Der Mitnehmerbolzen 27 ist an seinem stirnseitigen Umfang längs einer umlaufenden Schweißnaht 28 mit beiden Blechschalen verschweißt.

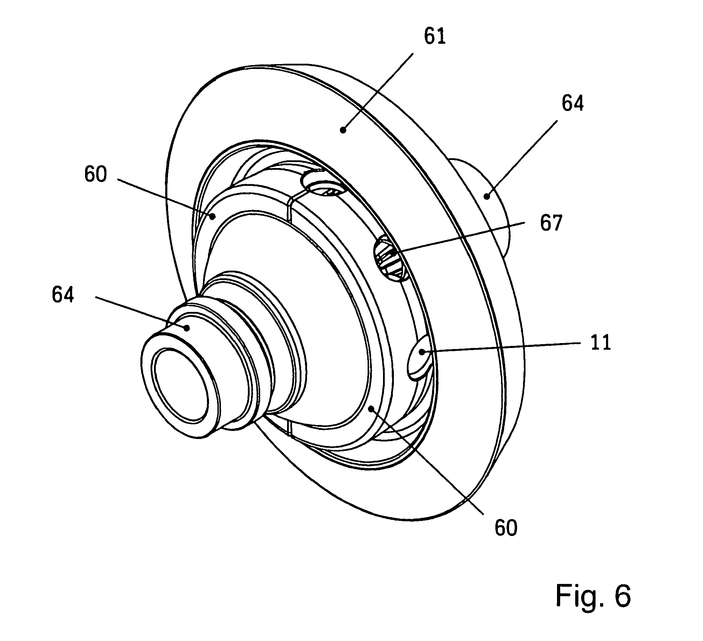

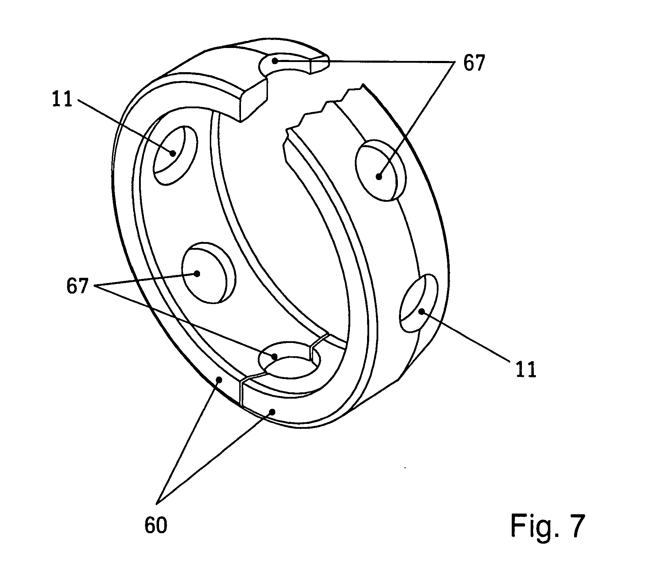

Die Figuren 6 bis 10 zeigen ein anderes Ausführungsbeispiel eines Ausgleichsgehäuses. Dieses unterscheidet sich von den vorbeschriebenen Ausführungsbeispielen insbesondere dadurch, dass ein in Axialrichtung hälftig geteilter Umfangsring 60 vorgesehen ist, der gemäß Figur 7 aus zwei gleichen Hälften besteht. Wie bereits zu den in Umfangsrichtung geteilten Umfangsringen 35, 36 gemäß Figur 4 aufgezeigt, ist der in Axialrichtung geteilte Umfangsring 60 im Axialschnitt unsymmetrisch ausgebildet, nämlich im Bereich seiner Anlagefläche an der Deckelschale 62 des Ausgleichsgehäuses stärker ausgebildet, mit zunehmender Abnahme seiner Stärke zur Tragschale 63 hin, denn dort dient das Antriebszahnrad 61 der zusätzlichen Aussteifung der Tragschale 63.

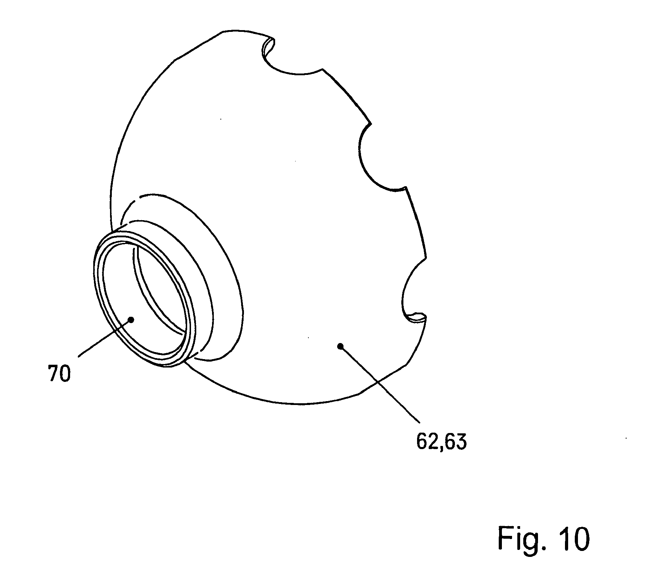

Gemäß den Figuren 6 und 7 besitzt der geteilte Umfangsring 60 neben den gegenüberliegenden Sitzbohrungen 11 zur Befestigung des bzw. der Mitnehmerbolzen 27 weitere über den Umfang verteilt angeordnete Öldrainagebohrungen 67 für das Getriebeöl, welche wie die Sitzbohrungen 11 deckungsgleich in den Blechschalen des Ausgleichsgehäuses vorgesehen sind (Fig.10).

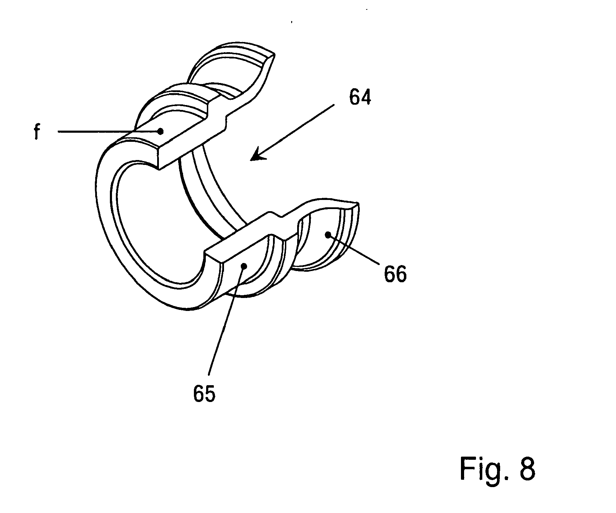

Jede Blechschale 62, 63 ist für den Anschluss der Radachsen jeweils mit einer Nabenhülse 64 verbunden, welche in Figur 8 gesondert dargestellt ist. An deren Schnittbild erkennt man den eigentlichen Lagersitz 65 für die Radachse. Zumindest die äußere Umfangsfläche f des Lagersitzes 65 ist zur Aufnahme eines Axiallagers genau bearbeitet. An den Lagersitz 65 schließt sich zur Herstellung der Fügeverbindung mit der darin aufgenommenen Blechschale ein Verbindungsring 66 an, dessen Innenkontur in Anpassung an die Form der Blechschale nach radial außen geschwungen ist und dessen Stärke in Axialrichtung gesehen vom Lagersitz weg zunehmend abnimmt. Durch geeignete Dimensionierung des Verbindungsrings 66 gelingt es, die Kerbspannung in der Fügezone mit den Blechschalen geeignet zu reduzieren.

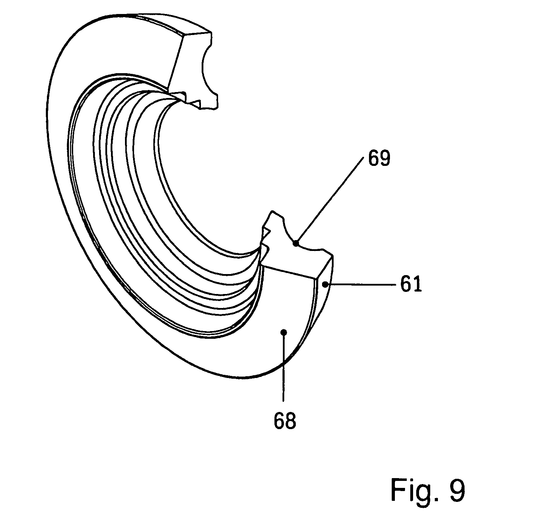

Das in Figur 9 aufgeschnitten dargestellte Antriebszahnrad 61 besitzt auf seiner der Deckelschale 62 zugewandten Fläche 68 eine Stirnradverzahnung oder als Kegelradverzahnung, welche in Figur 9 zeichnerisch nicht näher dargestellt ist. Die der Verzahnung gegenüberliegende radiale Fläche 69 beschreibt eine rillenartige Vertiefung zum Zwecke der Gewichtsreduzierung, welche zur Vermeidung lastbedingter Verformungen geeignet ausgebildet ist. An seinem Innenumfang ist das Antriebszahnrad 61 derartig profiliert, dass es den Umfangsring 60 stirnseitig übergreift und außerdem in Art einer Fügeverbindung an der Tragschale 63 anliegt. Vorteilhaft wird das Antriebszahnrad über seinen Umfang sowohl mit der Tragschale 63 als auch mit dem geteilten Umfangsring 60 verschweißt.

Figur 10 zeigt eine der beiden Blechschalen des Ausgleichsgehäuses, welches aus zwei gleichen Blechschalen, nämlich aus Deckelschale 62 und Tragschale 63 zusammengesetzt ist. Die Blechschalen besitzen jeweils eine Nabenaushalsung 70 für die Fügeverbindung mit einer Nabenhülse 64 sowie an ihrem großen Umfang halbringförmige Aussparungen zur Ausbildung der Sitzbohrungen 11 und von Öldrainagebohrungen 67.

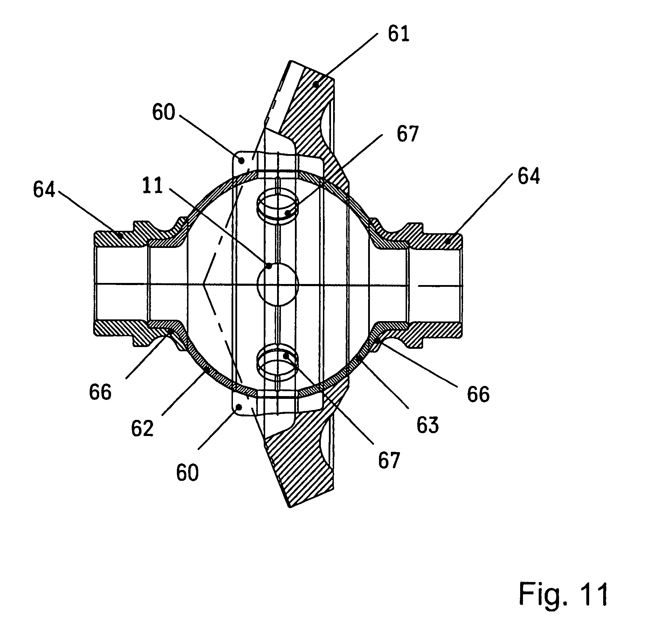

Figur 11 zeigt in einem Axialschnitt das Ineinandergreifen der einzelnen Bauteile in der Ansicht, nämlich den Zusammenbau aus Nabenhülsen 64 (Fig. 8), Deckelschale 62 und Tragschale 63 (Fig.10), Umfangsring 60 (Fig. 7) sowie Antriebszahnrad 61 (Fig. 9). Alle Bauteile sind eng ineinandergefügt und miteinander verschweißt. Eine Radachse 71 und ein Ende eines fliegend befestigten Mitnehmerbolzens 72 sind dort mit strichlierten Linien eingezeichnet.

## Patentansprüche

1. Differential in Leichtbauweise für Kraftfahrzeuge mit einem aus zwei Blechschalen bestehenden Ausgleichsgehäuse, in welchem Ausgleichskegelräder (22, 23) auf gehäusefesten Mitnehmerbolzen (27) gelagert und mit Achskegelrädern (14, 20) verzahnt sind, und wobei eine Tragschale (1), an deren Außenumfang ein Antriebszahnrad (29, 61) befestigt ist, und eine Deckelschale (18) zur Bildung des Ausgleichsgehäuses längs einer gemeinsamen Verbindungsebene (4) zusammengefügt sind, und wobei ein oder mehrere Mitnehmerbolzen (27) jeweils mit wenigstens einem Ende in Gehäusebohrungen aufgenommen und dort befestigt sind, welche jeweils zur Hälfte in der Tragschale (1) und der Deckelschale (18) ausgebildet sind,
**dadurch gekennzeichnet,**
**dass** beide Blechschalen (1,18) angrenzend an deren Verbindungsebene (4) von einem oder mehreren Umfangsringen (6) zu ihrer Aussteifung eingefaßt sind.

2. Differential nach Anspruch 1,
**dadurch gekennzeichnet,**
**dass** in den Umfangsringen zu den Gehäusebohrungen (5) fluchtende Sitzbohrungen (11) ausgebildet sind.

3. Differential nach Anspruch 2,
**dadurch gekennzeichnet,**
**dass** ein die Verbindungsebene (4) überbrückender einteiliger Umfangsring (6) vorgesehen ist.

4. Differential nach Anspruch 2,
**dadurch gekennzeichnet,**
**dass** zwei an die Verbindungsebene (4) angrenzende Umfangsringe (35, 36) vorgesehen sind.

5. Differential nach Anspruch 2,
**dadurch gekennzeichnet,**
**dass** jeder Umfangsring (60) in Axialrichtung wenigstens in zwei Ringhälften geteilt ist.

6. Differential nach Anspruch 2,
**dadurch gekennzeichnet,**
**dass** an den Außenseiten der Blechschalen (1,18) zylindrische Sitzflächen (9) ausgebildet sind, die an entsprechenden Innensitzflächen der Umfangsringe anliegen.

7. Differential nach Anspruch 2,
**dadurch gekennzeichnet,**
**dass** die Umfangsringe in der Verbindungsebene (4) und/oder längs ihrer Außenränder mit den Außenseiten der Blechschalen (1,18) verschweißt sind.

8. Differential nach Anspruch 1,
**dadurch gekennzeichnet,**
**dass** die Zahnscheibe des Antriebszahnrades (29, 61) wenigstens längs zweier Umfangskanten ihrer Innenumfangsfläche mit der Tragschale (1, 63) und/oder einem Umfangsring verschweißt ist.

9. Differential nach Anspruch 1,
**dadurch gekennzeichnet,**
**dass** für den Anschluß der Radachsen an jeder Blechschale (1,18) eine nach außen vorspringende Lagernabe (2) ausgebildet ist, zu deren Aussteifung an der Außenseite im Bereich des Nabenansatzes (3) ein Nabenring (7) vorgesehen ist, der mit der Blechschale (1,18) eine gemeinsame Stützfläche bildet und längs zweier Umfangskanten mit dieser verschweißt ist.

10. Differential nach Anspruch 9,
**dadurch gekennzeichnet,**
**dass** die Stärke der Blechschale (1,18) vom Nabenansatz (3) zur Verbindungsebene (4) hin stetig geringfügig abnimmt.

11. Differential nach Anspruch 1,
**dadurch gekennzeichnet,**
**dass** für den Anschluss der Radachsen jede Blechschale (62 63) mit einer Nabenhülse (64) verbunden ist, an welcher ein nach außen vorspringender Lagersitz (65) ausgebildet ist, an den sich ein an die Form der Blechschale (1,18) angepasster Verbindungsring (66) anschließt.

12. Differential nach Anspruch 1,
**dadurch gekennzeichnet,**
**dass** ein diagonal durchgehender Mitnehmerbolzen (27) vorgesehen ist, der wenigstens mit einem Ende längs des Umfangs seiner Stirnseite mit einem oder mehreren der Umfangsringe fest verbunden ist.

13. Differential nach Anspruch 3,
**dadurch gekennzeichnet,**
**dass** der einteilige Umfangsring (6) im Querschnitt trapezförmig ausgebildet und mit seinem dicken Ende mit der Deckelschale (18) verschweißt ist.

14. Differential nach Anspruch 1,
**dadurch gekennzeichnet,**
**dass** der Mitnehmerbolzen (27) als Hohlbolzen ausgebildet ist.

## Claims

1. A differential of lightweight construction for motor vehicles having a differential housing made of two sheet metal shells, in which differential bevel gears (22, 23) are supported on driving pins (27) fixed to the housing and mesh with axle bevel gears (14, 20), and wherein a carrier shell (1) having a drive gear (29, 38, 61) fastened to the outer circumference thereof and a cover shell (18) are fitted together along a common joint plane (4) to form the differential housing, and wherein one or more driving pins (27) each have at least one end received and fastened in housing holes, which are each formed half in the carrier shell (1) and the cover shell (18),
**characterized in that**
that the two sheet metal shells (1, 18) are encompassed by one or more circumferential rings (6) adjacent to the joint plane (4) thereof for reinforcement thereof.

2. A differential according to claim 1,
**characterized in that**
seating holes (11) aligned with the housing holes (5) are formed in the circumferential rings.

3. A differential according to claim 2,
**characterized in that**
there is provided a one-piece circumferential ring (6) that bridges over the joint plane (4).

4. A differential according to claim 2,
**characterized in that**
there are provided two circumferential rings (35, 36) adjoining the joint plane (4).

5. A differential according to claim 2,
**characterized in that**
each circumferential ring (60) is split in axial direction into at least two ring halves.

6. A differential according to claim 2,
**characterized in that**
cylindrical seating faces (9), which bear on corresponding inner seating faces of the circumferential rings, are formed on the outsides of the sheet metal shells (1, 18).

7. A differential according to claim 2,
**characterized in that**
the circumferential rings are welded to the outsides of the sheet metal shells (1, 18) in the joint plane (4) and/or along the outer rims thereof.

8. A differential according to claim 1,
**characterized in that**
the toothed disk of the drive gear (29, 61) is welded to the carrier shell (1, 63) and/or to a circumferential ring at least along two circumferential edges of its inner circumferential face.

9. A differential according to claim 1,
**characterized in that**
for attachment of the wheel axles to each sheet metal shell (1, 18), there is formed an outwardly protruding bearing hub (2), for the stiffening of which there is provided, on the outside, in the region of the hub root (3), a hub ring (7), which together with the sheet metal shell (1, 18) forms a common bracing face and is welded thereto along two circumferential edges.

10. A differential according to claim 9,
**characterized in that**
the thickness of the sheet metal shell (1, 18) decreases steadily and slightly from the hub root (3) to the joint plane (4).

11. A differential according to claim 1,
**characterized in that**
for attachment of the wheel axles, each sheet metal shell (62, 63) is joined to a hub bush (64), on which there is formed an outwardly protruding bearing seat (65), to which there is attached a joining ring (66) adapted to the shape of the sheet metal shell (1, 18).

12. A differential according to claim 1,
**characterized in that**
there is provided a driving pin (27) which passes diagonally through and which at least at one end is firmly joined along the circumference of its end face to one or more of the circumferential rings.

13. A differential according to claim 3,
**characterized in that**
the one-piece circumferential ring (6) has trapezoidal cross section and is welded at its thick end to the cover shell (18) .

14. A differential according to claim 1,
**characterized in that**
the driving pin (27) is formed as a hollow pin.

## Revendications

1. Différentiel en construction légère destiné à des véhicules comprenant un carter de différentiel constitué de deux coques de tôle, dans lequel des roues coniques de différentiel (22, 23) sont montées sur des boulons entraîneurs (27) solidaires du carter et sont imbriquées avec des roues coniques d'essieu (14, 20), et une coque portante (1), sur le pourtour extérieur de laquelle est fixée une roue dentée d'entraînement (29, 61), et une coque de couvercle (18) sont assemblées pour former le carter de différentiel le long d'un plan de liaison commun (4), et un ou plusieurs boulons entraîneurs (27) étant réceptionnés à chaque fois avec au moins une extrémité dans des alésages de carter et y étant fixés, lesquels sont conçus à chaque fois pour moitié dans la coque portante (1) et dans la coque de couvercle (18), **caractérisé**
**en ce que** les deux coques en tôle (1, 18) sont bordées de façon contiguë à leur plan de liaison (4) par une ou plusieurs bagues périphériques (6) pour leur renforcement.

2. Différentiel selon la revendication 1,
**caractérisé**
**en ce que** des alésages de siège (11) sont conçus dans les bagues périphériques de façon alignée avec les alésages de carter (5).

3. Différentiel selon la revendication 2,
**caractérisé**
**en ce qu'**une bague périphérique (6) d'un seul tenant, surmontant le plan de liaison (4), est prévue.

4. Différentiel selon la revendication 2,
**caractérisé**
**en ce que** deux bagues périphériques (35, 36) contiguës au plan de liaison (4) sont prévues.

5. Différentiel selon la revendication 2,
**caractérisé**
**en ce que** chaque bague périphérique (60) est divisée dans le sens axial au moins en deux moitiés de bague.

6. Différentiel selon la revendication 2,
**caractérisé**
**en ce que** des surfaces de siège (9) cylindriques sont conçues sur les côtés extérieurs des coques en tôle (1, 18), lesquelles surfaces sont contiguës à des surfaces de siège intérieures correspondantes des bagues périphériques.

7. Différentiel selon la revendication 2,
**caractérisé**
**en ce que** les bagues périphériques sont soudées dans le plan de liaison (4) et/ou le long de leurs bords extérieurs avec les côtés extérieurs des coques en tôle (1, 18).

8. Différentiel selon la revendication 1,
**caractérisé**
**en ce que** le disque cranté de la roue dentée d'entraînement (29, 61) est soudé au moins le long de deux arêtes périphériques de leur surface périphérique intérieure avec la coque portante (1, 63) et/ou une bague périphérique.

9. Différentiel selon la revendication 1,
**caractérisé**
**en ce qu'**un moyeu de palier (2) faisant saillie vers l'extérieur est conçu pour le raccordement des essieux de roue sur chaque coque en tôle (1, 18), moyeu de palier pour le renforcement duquel est prévue une bague de moyeu (7) sur le côté extérieur dans la zone de l'embase de moyeu (3), laquelle bague forme une surface de soutien commune avec la coque en tôle (1, 18) et est soudée avec cette surface le long de deux arêtes périphériques.

10. Différentiel selon la revendication 9,
**caractérisé**
**en ce que** l'épaisseur de la coque en tôle (1, 18) diminue constamment légèrement depuis l'embase de moyeu (3) en direction du plan de liaison (4).

11. Différentiel selon la revendication 1,
**caractérisé**
**en ce que**, pour le raccordement des essieux de roue, chaque coque en tôle (62, 63) est reliée à un manchon de moyeu (64), manchon sur lequel est conçu un siège de palier (65) faisant saillie vers l'extérieur, auquel se raccorde une bague de liaison (66) adaptée à la forme de la coque en tôle (1, 18).

12. Différentiel selon la revendication 1,
**caractérisé**
**en ce qu'**il est prévu un boulon entraîneur (27) continu dans le sens diagonal, qui est relié fixement au moins par une extrémité le long du pourtour de son côté avant à une ou plusieurs des bagues périphériques.

13. Différentiel selon la revendication 3,
**caractérisé**
**en ce que** la bague périphérique (6) d'un seul tenant est conçue en forme de trapèze en section et est soudée par son extrémité épaisse à la coque de couvercle (18) .

14. Différentiel selon la revendication 1,
**caractérisé**
**en ce que** le boulon entraîneur (27) est conçu sous forme de boulon creux.
